# DEMANDE DE BREVET EUROPEEN

(11) **EP 2 796 526 A1**
(43) Date de publication de la demande: **29.10.2014**
(21) Numéro de dépôt: 13305537.6
(22) Date de dépôt: 24.04.2013
(51) Int. Cl.: C09K 3/32, E02B 15/04

(54) **Procédé et composition pour la mise en forme solide d'hydrocarbures et de corps gras liquides, dispositifs pour la mise en oeuvre de ce procédé et la fabrication de cette composition, et leur utilisation pour la dépollution**

(71) Demandeur: Calude SARL, 1470 Luxembourg (LU)
(72) Inventeur: Chiaramello, Jean-Marc, 06100 Nice (FR); Bertrand, Claude, 77974 Kehl am Rhein (DE)
(74) Mandataire: Colombet, Alain André

(57) **Abrégé**

Procédé et dispositif de mise en forme solide d'hydrocarbures ou de corps gras sous forme sensiblement liquide, notamment pour la dépollution de surfaces ou de sites pollués par ces hydrocarbures ou corps gras, caractérisée en ce que l'on met en contact la matière à mettre sous forme solide avec une composition chauffée à l'état liquide, comprenant, au moins en proportion majoritaire, un matériau solide à température ambiante choisi dans le groupe constitué par les graisses animales solides à température ambiante, notamment le suif, et optionnellement, un agent fluidifiant, obtenant ainsi un matériau complexe solide, facile à recueillir, et pouvant être retraité pour récupérer le matériau.

## Description

La présente invention concerne un procédé permettant de mettre en forme solide des liquides tels que des hydrocarbures ou des corps gras, notamment lorsqu'ils sont répandus sur des surfaces solides ou aqueuses, ainsi que des dispositifs pour sa mise en oeuvre.

Elle a également trait à une composition permettant la mise en oeuvre de ce procédé, ainsi qu'à un procédé pour sa fabrication.

Elle a également trait à leurs utilisations pour la dépollution de sites naturels ou non, terrestres ou aquatiques, souillés ou recouverts de tels hydrocarbures ou corps gras plus ou moins liquides.

La pollution accidentelle, voire intentionnelle, de locaux, de surfaces terrestres, de sites aquatiques, fluviaux, lacustres ou maritimes, pose de graves problèmes économiques et écologiques.

On a déjà proposé divers moyens de dépollution pour ces déversements, et notamment des moyens de confinement et de ramassage. En raison de la forme liquide de ces polluants, on a également déjà proposé des moyens destinés à les solidifier pour faciliter leur ramassage.

On a déjà proposé d'absorber ces polluants liquides par des produits absorbants. Par exemple le brevet EP-A-1341620, se propose d'absorber ces polluants liquides par des produits absorbants .On a proposé d'absorber les hydrocarbures, y compris sur des sites aquatiques, par des préparations déshydratées de tourbes et toutes sortes d'absorbants ont déjà été envisagés.

Tous ces produits sont volumineux et difficiles à répandre sur les sites pollués. Sur des surfaces aquatiques ils peuvent s'hydrater et finir par entrainer au fond l'agglomérat de polluants.

Selon une autre voie, on a déjà proposé de solidifier des hydrocarbures par des agents chimiques polymérisants ou gélifiants. Ainsi le brevet FR-A-2806939 propose de solidifier des hydrocarbures liquides par l'utilisation de produits chimiques tels que des peroxydes. D'autres agents sont envisagés, par exemple dans le brevet FR-A-1026092 pour une solidification par gélification. En fait une pluralité de tels agents polymérisants ou gélifiants a été proposée. Beaucoup ont l'inconvénient d'être des particules solides.

Une étude importante des propriétés de nombreux agents solidifiants a été publiée par Ghalambor, A. 1997. The effectiveness of solidifiers for combatting oil spills, Louisiana Applied Oil Spill Research and Development Program, OSRADP Technical Report Series 96-006. Elle conclut à une grande inconstance des résultats, sans parler des inconvénients dus à la nature chimique des solidifiants, dans un cadre naturel.

L'obtention, l'acheminement et la mise en oeuvre de ces produits chimiques posent de nombreux problèmes, sans parler des risques de pollution résiduelle provenant de ces produits eux-mêmes.

La présente invention se propose de remédier à ces inconvénients et de fournir un procédé et une composition permettant de solidifier instantanément, et au besoin sur de grandes surfaces, des nappes d'hydrocarbures ou de corps gras, et d'une façon qui permette un enlèvement facile, notamment pour le traitement de surfaces polluées. Elle se propose également de permettre de traiter même de très grandes surfaces, y compris des surfaces maritimes, avec des quantités comparativement très faibles de cette composition. Elle permet de procéder à ces traitements de manière écologique. Elle permet également de séparer ensuite le polluant d'avec le matériau de la composition, puis de réutiliser ce dernier.

L'invention a pour objet un procédé de mise en forme solide d'hydrocarbures ou de corps gras sous forme sensiblement liquide, notamment pour la dépollution de surfaces ou de sites pollués par ces hydrocarbures ou corps gras, **caractérisée en ce que** l'on met en contact la matière à mettre sous forme solide avec une composition à l'état liquide, notamment par chauffage, comprenant, au moins en proportion majoritaire, un matériau solide à température ambiante choisi dans le groupe constitué par les graisses animales solides à température ambiante , et optionnellement, un agent fluidifiant.

Dans un mode de mise en oeuvre particulièrement préféré, on procède, immédiatement avant ladite mise en contact, à une étape de préparation de la matière à solidifier améliorant la distribution de ladite composition dans la matière.

Cette étape comporte, de préférence, une aspersion par un acide, notamment un acide organique à chaîne courte, de préférence l'acide citrique, ou l'acide acétique. Les autres acides usuels peuvent cependant aussi être utilisés, tels que par exemple l'acide sulfurique.

De préférence l'acide est utilisé aux concentrations usuelles dans le commerce.

Le débit d'acide est faible, comparé au débit de composition. De préférence le volume d'acide déversé est inférieur ou égal à 10 %, du volume total de composition utilisée, et plus préférentiellement à 5 %, par exemple de l'ordre de 2 à 4 %.

Dans un autre mode de mise en oeuvre cette étape peut comporter l'envoi d'un jet de gaz comprimé, notamment d'air comprimé sur la matière à solidifier. De préférence on utilise des jets d'air comprimé très fins. Dans un autre mode de mise en oeuvre, encore, cette étape peut comporter une dissociation mécanique, par exemple en utilisant des lames ou autres moyens mécaniques se déplaçant dans ladite matière. Ces autres modes de mise en oeuvre peuvent aussi être associés au déversement d'acide.

Cette étape de préparation de la matière à mettre sous une forme solide peut être avantageusement mise en oeuvre dans une zone à courte distance devant la zone de mise en contact de la matière avec la composition sous forme liquide, par rapport au sens de déplacement relatif entre la matière, par exemple une nappe d'hydrocarbures, et les moyens de mise en contact. De préférence la distance entre les deux zones est de 5 cm à 1 m, plus préférentiellement entre 15 et 50 cm.

De façon avantageuse l'état liquide de ladite composition peut être obtenu par chauffage dudit matériau solide à ou au-dessus de sa température de fusion supérieure à la température ambiante, ou bien par chauffage de la composition elle-même. Le chauffage est de préférence à une température d'au moins 35 à 40°C, par exemple entre 45 et 55°C, voire plus, par exemple 60 et 80 ou 90 °C.

L'invention a également pour objet une telle composition et son utilisation pour la mise en forme solide d'hydrocarbures ou de corps gras sous forme sensiblement liquide, notamment pour la dépollution de surfaces ou de sites pollués par ces hydrocarbures ou corps gras, comprenant, au moins en proportion majoritaire, un matériau solide à température ambiante choisi dans le groupe constitué par les graisses animales, et optionnellement, un agent fluidifiant.

Par matériau de graisse animale on entend un matériau graisseux purifié, et donc sensiblement dépourvu d'autres éléments tissulaires de l'animal, généralement obtenu par une étape de fonte de la graisse brute prélevée.

De préférence la graisse animale est du suif. Le suif est un produit obtenu par la fonte de la graisse d'espèces animales, notamment le boeuf. Une autre espèce avantageuse est le mouton.

On peut cependant utiliser du suif d'autres espèces, ou d'autres graisses dès lors que ces graisses sont solides à température ambiante et deviennent liquides à une température sensiblement supérieure à la température ambiante. Ces graisses peuvent être obtenues, notamment, par fusion de la graisse de l'animal.

On préfère des graisses animales ayant un point de fusion non inférieur à 38°C, et plus préférentiellement de l'ordre de 40 à 55°C.

Un tel matériau solide à température ambiante, qui forme la totalité, ou la majorité de la composition, est totalement et rapidement biodégradable, dans chacun des environnements où la composition est mise en oeuvre.

Par proportion majoritaire on entend une proportion en volume, par rapport à la composition totale d'au moins 50 %, de préférence d'au moins 75 %, et plus préférentiellement d'au moins 90 %, voire 100% en l'absence d'agent fluidifiant.

L'agent fluidifiant, optionnellement présent dans la composition, a pour rôle d'ajuster la fluidité de la composition pour faciliter, si nécessaire, son écoulement lors de la mise en contact avec la matière à mettre à l'état solide.

Cet agent peut être un surfactant usuel, par exemple un polysorbate ou Tween. Mais on préfère utiliser une huile, de préférence une huile minérale. Il peut d'ailleurs s'agir d'une huile polluante, par exemple de l'huile de vidange, car elle sera entièrement solidifiée et ramassée par le procédé selon l'invention.

La proportion de cet agent, notamment d'une huile, est de préférence inférieure ou égale à 5 % en poids, et plus préférentiellement de l'ordre de 1 à 2 %, voire moins.

La composition peut éventuellement comporter une quantité minoritaire d'un matériau, notamment pour augmenter la densité de la composition, éventuellement sous forme de particules solides, par exemple de la limaille de fer, mais on préfère qu'elle comporte essentiellement du suif ou un autre matériau obtenu à partir de graisse animale fondue. La présence de limaille de fer peut faciliter la récupération du matériau complexe obtenu après traitement, par exemple en mettant en oeuvre des aimants ou électro-aimants.

Pour fabriquer la composition on peut chauffer ses composants, s'il y en a plusieurs, au-dessus de la température de fusion dudit matériau solide à température ambiante et mélanger les éventuels autres composants, mais on peut aussi se contenter de chauffer seulement ledit matériau solide à température ambiante, pour le rendre liquide, et ajouter l'éventuel autre composant non chauffé, dès lors que la température dudit matériau est suffisante pour maintenir l'ensemble de la composition dans son état liquide.

Si l'agent fluidifiant est présent, il peut être chauffé ou non et mélangé audit matériau rendu liquide.

Cette fabrication peut avoir lieu avant l'utilisation de la composition pour la mise en oeuvre du procédé selon l'invention, auquel cas on conserve la composition à la température élevée, de préférence sous agitation.

Cependant on peut aussi fabriquer la composition chaude pratiquement au moment de son utilisation.

Par hydrocarbures au sens de la présente invention on entend, seuls ou en mélanges, les hydrocarbures aliphatiques et/ou aromatiques, saturés ou insaturés, liquides à température ambiante, et notamment, de manière non limitative, les pétroles bruts ou crudes, les condensats ou pentane plus, les résidus d'hydrocarbures, les pétroles extra-lourds ou syncrudes fluides, les fuel-oils ou huiles minérales, les pétroles raffinés, carburants, essences, gazoles, et les hydrocarbures synthétiques.

Par corps gras, liquides à température ambiante, on entend, de manière non limitative, les triglycérides, les huiles végétales ou animales, les graisses et les acides gras peu ou pas hydrosolubles.

S'agissant de ces hydrocarbures ou corps gras liquides à température ambiante, on entend par liquide, non seulement un état parfaitement fluide mais également des états plus pâteux, mais ayant une tendance spontanée à s'étaler sur une surface solide ou aquatique.

D'une façon générale cette matière à solidifier a une densité inférieure à 1, lui permettant de flotter sur l'eau le cas échéant, mais cette densité peut être supérieure si la matière est directement accessible à la composition selon l'invention.

Par mise sous forme solide de cette matière on entend la formation d'un matériau complexe contenant ladite matière, telle qu'un hydrocarbure ou un corps gras, et au moins le matériau solide à température ambiante, ce matériau solide complexe étant apte à être appréhendé ou ramassé et ainsi à être totalement séparable de la surface solide ou aquatique sur laquelle se trouvait ladite matière, sauf éventuellement pour la portion de matière qui aurait pu être absorbée ou autrement soustraite dans le cas où ladite matière se serait trouvée sur une surface solide mais poreuse ou fissurée ou autrement imprégnable. Le procédé peut même être mis en oeuvre sur des matériaux meubles, lorsqu'ils sont saturés.

Lorsque la composition utilisée contient un agent lubrifiant, notamment de nature huileuse, on peut prévoir, de manière préférée, que cet agent soit également retenu par le matériau complexe, permettant ainsi son élimination de la surface traitée lors de l'enlèvement dudit matériau complexe.

Dans un perfectionnement préféré de l'invention, une fois le matériau complexe solide enlevé, on peut le chauffer à une température égale ou supérieure au point de fusion du matériau solide à température ambiante de la composition selon l'invention, puis séparer, de préférence par simple décantation, ledit matériau choisi dans le groupe constitué par les susdites graisses animales d'avec les hydrocarbures ou corps gras, et éventuellement l'agent lubrifiant huileux. Pour cette séparation on peut procéder par simple soustraction des liquides qui se superposent, ou bien abaisser la température pour rendre solide ledit matériau solide à température ambiante et évacuer la ou les phases restées liquide.

En variante on peut procéder à cette séparation par simple centrifugation dudit matériau complexe chauffé à une température supérieure au point de fusion du matériau solide à température ambiante de la composition selon l'invention, grâce à la différence des densités.

On peut ensuite réutiliser ce matériau choisi dans le groupe constitué par les graisses animales solides à température ambiante, pour fabriquer une nouvelle quantité de composition selon l'invention, qui peut être à nouveau mise en oeuvre dans le procédé selon l'invention.

La matière récupérée, à savoir les hydrocarbures ou corps gras, peut également, le cas échéant, être réutilisée.

L'invention a également pour objet l'application du procédé de mise en forme solide à la dépollution de sites terrestres ou aquatiques recouverts d'une nappe plus ou moins liquide continue ou fragmentée, d'hydrocarbure ou de corps gras.

Dans un tel procédé de dépollution on déverse sur la nappe une quantité de composition selon l'invention chauffée à l'état liquide, on recueille la formation solide obtenue, et , optionnellement, on sépare par chauffage au moins ledit matériau solide à température ambiante, d'avec les hydrocarbures ou corps gras provenant de la nappe.

De préférence, si la nappe est importante, on réutilise ledit matériau solide à température ambiante pour fabriquer, de préférence sur place, une nouvelle quantité de composition, que l'on réutilise pour poursuivre la dépollution.

On procède, de préférence, à un déversement par épandage, de préférence par aspersion ou pulvérisation, de façon à amener la composition en contact avec la nappe en un grand nombre de points, typiquement peu écartés, ou même sur la continuité de la surface traitée.

De préférence on procède à l'aspersion par des buses à une hauteur variant entre 15 cm et 1m, notamment entre 30 et 60 cm.

La pression d'éjection peut être avantageusement de l'ordre de 2 à 6 bar.

Lorsque, comme cela est particulièrement préféré, on procède à l'étape de préparation de la matière à solidifier, le déversement d'acide peut être effectué, de préférence sous forme de jets minces et puissants, à une pression, par exemple de l'ordre de 2 à 6 bar, par exemple à une hauteur de à 15 cm à 1 m. Si l'on utilise des jets d'air comprimé, on préfère les envoyer à une pression, par exemple de l'ordre de 4 à 12 bar, par exemple à une hauteur comprise entre 15 cm à 1 m. Il est ainsi possible de solidifier, puis de recueillir, des nappes pouvant avoir une épaisseur de plusieurs centimètres, voire de 10 ou davantage.

La quantité de composition à déverser sur la nappe peut être généralement de 0,05 à 0,25 litre de composition pour 1 litre d'hydrocarbure ou de corps gras. Cependant cette quantité peut être supérieure, allant par exemple jusqu'à égalité, dans le cas d'hydrocarbures très épais ou très compacts. Ainsi une nappe de viscosité modérée de 1 cm d'épaisseur peut être traitée par 0,5 litre de composition par m2.

On peut aussi mettre en oeuvre le procédé de dépollution selon l'invention sur des nappes sur lesquelles on a déjà déversé un matériau agglomérant ou absorbant, par exemple, tel que de la tourbe sèche, mais on préfère généralement mettre en oeuvre le procédé sur les nappes sans autre matériau.

On procède au recueil de la nappe solidifiée, de préférence en continu avec l'étape de solidification. En mer ou sur une surface aquatique on peut avantageusement utiliser des filets et/ou des moyens de ramassage par exemple, des godets ou des tapis roulants inclinés, dont l'extrémité inférieure est immergée. Il est préférable, comme cela est pratiqué, de circonscrire la nappe par la mise en place de boudins flottants. Sur une surface terrestre des moyens de recueil usuels, par exemple pelle mécanique, ou bulldozers, peuvent être utilisés.

Dans un perfectionnement du procédé de dépollution, notamment pour les nappes de grande surface, on peut procéder, en continu, à la mise en forme solide de ladite matière d'hydrocarbures ou de corps gras sensiblement liquide par déversement de ladite composition, au recueil dudit matériau complexe solide ainsi formé, à la séparation par chauffage, au moins dudit matériau solide à température ambiante, d'avec les hydrocarbures ou corps gras recueillis, à la refabrication de ladite composition liquide à partir dudit matériau séparé, puis au déversement de ladite composition refabriquée.

L'invention a également pour objet des dispositifs et leur utilisation permettant la mise en oeuvre du procédé selon l'invention et de ses applications.

Elle a notamment pour objet d'une part un dispositif et d'autre part son utilisation, pour la mise en oeuvre du procédé de mise en forme solide d'hydrocarbures ou de corps gras sous forme sensiblement liquide selon l'invention, **caractérisé en ce qu'il** comprend un récipient pouvant contenir un volume de composition selon l'invention à l'état liquide, des moyens de déversement de cette composition, et des moyens pour son transfert depuis ledit récipient vers lesdits moyens de déversement.

Dans une forme de réalisation avantageuse ledit récipient peut comporter lui-même des moyens de fabrication de ladite composition à l'état liquide. Ces moyens peuvent notamment comprendre des moyens de chauffage du contenu dudit récipient, et de préférence, des moyens d'agitation, notamment pour mélanger le matériau de graisse animale fondue avec un liquide lubrifiant, et/ou pour assurer une homogénéisation de la composition.

De préférence les moyens de déversement comportent au moins une buse permettant de faire gicler ou asperger la composition liquide sur une zone de contact avec la matière à solidifier. De préférence lesdits moyens comportent une pluralité de buses disposées sur une rampe d'épandage.

Lesdits moyens de transfert de la composition peuvent comporter un ou plusieurs tubes ou conduits souple ou rigides, s'étendant entre ledit réservoir et lesdits moyens de déversement, et des moyens, tels que, par exemple, des moyens de pompage, ou des moyens de mise sous pression de réservoir, pour transférer, sous pression, la dite composition liquide.

On préfère particulièrement maintenir, en permanence, lesdits moyens de transfert à une température à laquelle la composition reste bien fluide, et l'on préfère aussi que les moyens de déversement, par exemple, les buses, soient chauffés.

De préférence le réservoir est calorifugé, par exemple, par une gaine isolante périphérique. Les moyens de chauffage du réservoir sont, de préférence, extérieurs au réservoir, et constitués, par exemple, par une gaine chauffante, avantageusement sous la gaine isolante. On peut aussi utiliser, par exemple, des récipients à double parois, entre lesquelles on peut chauffer ou faire circuler de l'huile pour assurer le chauffage et le maintien à température pendant une longue période.

La chaleur de la cuve ou réservoir peut, de préférence, assurer elle-même le maintien en température des moyens de pompage et des moyens d'agitation.

Le maintien en température des moyens des tubes ou canalisations est, de préférence, assuré par des cordons chauffants fixés sur eux, de préférence, dans une gaine isolante des tubes.

Le maintien en température des buses peut être assuré, par exemple, par de colliers chauffants qui les entourent.

Dans la forme de réalisation préférée, dans laquelle on met en oeuvre une étape de préparation de la matière à solidifier à l'aide d'un acide, le dispositif comporte également un réservoir pour cet acide, des moyens de déversement et des moyens de transfert pour délivrer l'acide sous pression. De préférence, ces moyens de déversement comportent alors une ou plusieurs buses. Ces moyens sont réglables en position par rapport à la rampe de buses pour la composition et/ou, de préférence et, en hauteur par rapport à la surface à traiter de préférence solidarisés.

Par exemple, ces buses pour l'acide peuvent être fixées sur une rampe solidarisable à la rampe de déversement de la composition, les deux rampes étant alors disposées de façon que la zone d'aspersion d'acide précède de peu la zone de déversement de composition, de sorte que, lors de l'avance du dispositif, la composition se déverse immédiatement sur la matière liquide qui vient d'être aspergée par l'acide.

Il en est de même si l'action de l'acide est remplacée par des jets d'air comprimé.

L'invention a également pour objet un dispositif pour la mise en oeuvre du mode perfectionné dans lequel, après solidification de la matière, on procède à la récupération du matériau de la composition par chauffage, ce dispositif étant **caractérisé en ce qu'**il comporte une cuve recevant l'ensemble complexe solidifié de matière et de matériau de graisse animale, des moyens de chauffage de cet ensemble pour former des phases liquides séparées superposées de matière telle qu'un hydrocarbure ou un corps gras, et de matériau de graisse animale, optionnellement des moyens de refroidissement, si l'on désire solidifier ledit matériau, et des moyens de transfert séparés pour les deux volumes superposés.

Dans une autre forme de réalisation ce dispositif peut comporter, au lieu d'une cuve de décantation, une centrifugeuse permettant de séparer le matériau tel que le suif d'avec la ou les autres phases. De préférence la centrifugeuse est de type centrifugeuse à disques, par exemple, produite par la société Alfa Laval.

Le dispositif pour la mise en oeuvre du procédé de mise en forme solide d'hydrocarbures ou de corps gras sous forme sensiblement liquide selon l'invention, peut être de taille réduite, pour être transporté par un opérateur, mais il est préférable, du moins pour les pollutions plus importantes, qu'il soit monté sur un véhicule adéquat pouvant être amené directement sur le site à dépolluer.

Ce véhicule peut être par exemple un camion, une remorque, ou un véhicule tout terrain, ou une embarcation, par exemple, un ponton monté sur des flotteurs ou un navire, de préférence à au moins deux coques, l'ensemble formé par le dispositif et le véhicule pouvant ou non comporter des moyens de ramassage du solide produit par sa mise en oeuvre, et/ou des moyens de stockage pour évacuer ensuite le solide ramassé.

De façon avantageuse un tel ensemble peut comporter des récipients supplémentaires de réserve de composition.

Dans le cas de pollutions très importantes, voire majeures, notamment aquatiques, on peut prévoir que le même véhicule, par exemple un navire, porte également le dispositif de récupération du matériau de la composition, ce dernier étant ainsi immédiatement récupéré et remis en oeuvre, tandis que le polluant liquide séparé est stocké ou enlevé.

On peut même prévoir un ensemble fonctionnant en continu, dans lequel le matériau de graisse animale est réintroduit immédiatement dans le dispositif de mise en oeuvre du procédé selon l'invention.

D'une façon générale, il est préférable, de circonscrire les nappes, avant dépollution, notamment sur des surfaces aquatiques, par des boudins de confinement usuels.

D'autres avantages et caractéristiques de l'invention apparaîtront à la lecture de la description suivante, faite à titre d'exemple non limitatif, et se référant au dessin annexé, dans lequel :
La Figure 1 représente une vue schématique de la cuve d'un récipient de fabrication d'une composition selon l'invention, et de ses éléments de chauffage séparés.
La Figure 2 représente une vue schématique de cette cuve avec ses éléments de chauffage assemblés.
La Figure 3 représente une vue schématique de la partie formant couvercle de cette cuve.
La Figure 4 représente une vue schématique du récipient formé par la cuve avec son couvercle.
La Figure 5 représente une vue schématique du récipient, unie d'une conduite souple de transfert, et d'une rampe de déversement séparée.
La Figure 6 représente une vue schématique d'une enveloppe de calorifugeage du récipient.
La Figure 7 représente une vue schématique d'un couvercle supérieur avec des moyens de commande.
La Figure 8 représente une vue schématique de l'ensemble calorifugé.
La Figure 9 représente une vue schématique d'une buse de déversement de la composition.
La Figure 10 représente une vue schématique d'une rampe de buses.
La Figure 11 représente une vue schématique d'une rampe de buses avec une autre hauteur et un autre angle d'épandage.
La Figure 12 représente une vue schématique d'un dispositif associé de préparation par jet d'acide.
La Figure 13 représente une vue schématique de profil d'une rampe de déversement de composition avec flotteur.
La Figure 14 représente une vue schématique en perspective de cette rampe faisant partie d'un ensemble de dépollution d'une nappe d'hydrocarbure sur un site aquatique.
La Figure 15 représente une vue schématique d'une cuve d'un dispositif de récupération du matériau de la composition.
La Figure 16 représente une vue schématique d'un couvercle pour cette cuve de récupération.
La Figure 17 représente une vue schématique d'un récipient pour l'utilisation de volumes importants de composition selon l'invention.
La Figure 18 représente une vue schématique d'un filet de ramassage d'un dispositif selon l'invention.
La Figure 19 représente une vue schématique de profil d'un ensemble perfectionné de dépollution en continu d'une nappe d'hydrocarbure de grande surface sur un site aquatique
La Figure 20 représente une vue schématique de dessus de cet ensemble.

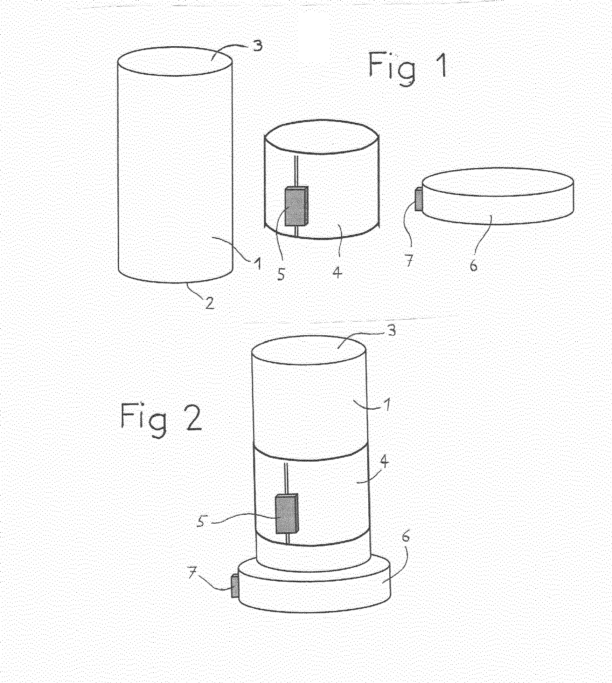

En se référant aux Figures 1 et 2, on voit que le dispositif comporte une cuve 1, de préférence métallique, de forme cylindrique, avec un fond 2 et une ouverture supérieure 3. Pour chauffer un volume de suif placé dans la cuve 1, on entoure celle-ci, vers sa partie inférieure, d'une ceinture chauffante électrique 4, d'un type usuel, avec un boitier d'alimentation électrique 5 comportant également un thermostat. La cuve 1 est placée sur un support de fond 6, également chauffant, avec son boitier 7 d'alimentation et son thermostat. Des moyens (non représentés) peuvent assurer la fixation sur le fond. Pour des dispositifs de taille importante notamment, on peut prévoir avantageusement un chauffage au gaz, de façon à être autonome, mais toute autre forme de chauffage autonome peut convenir.

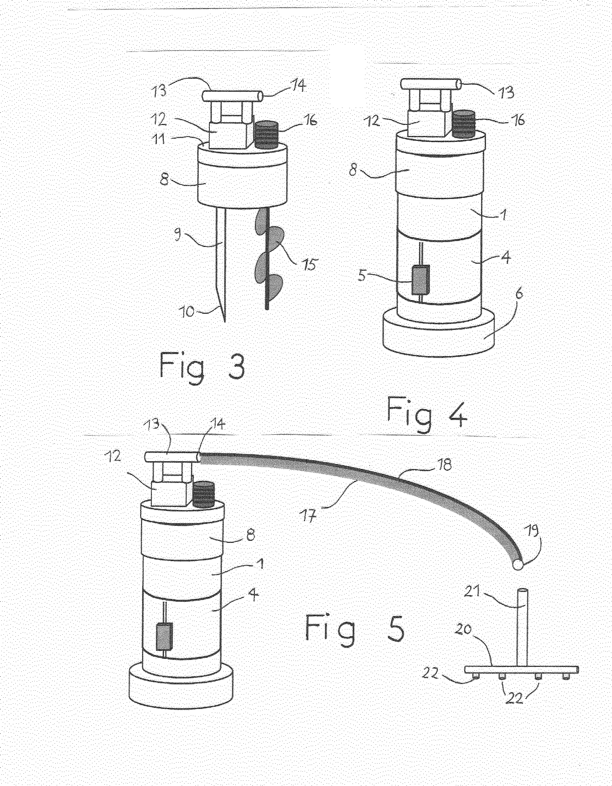

Sur les Figures 3 et 4, on voit un couvercle 8 de forme cylindrique qui peut être glissé sur la partie supérieure de la cuve 1 de façon étanche. Ce couvercle 8 présente un tube d'acier 9, biseauté à son extrémité inférieure 10, et qui traverse la partie supérieure plane 11 du couvercle 8 pour aboutir à une pompe 12, qui y est fixée, et dont émerge une tubulure de refoulement 13 présentant une extrémité de raccordement 14.

Le couvercle 8 porte également un agitateur hélicoïdal 15, s'étendant vers le bas, parallèlement au tube 9, et qui est entrainé par un moteur 16, également fixé sur la partie supérieure 11 du couvercle. De préférence le moteur 16 entraine l'agitateur par l'intermédiaire d'un embrayage, non représenté, pour un découplage mécanique si la composition se trouve dans un état solide ou trop visqueux.

Comme on le voit sur la figure 5, la sortie de raccordement 14 reçoit un tube ou conduit souple 17, résistant à la pression, et le long duquel s'étend un câble chauffant 18, pouvant être relié à une source électrique pour assurer le chauffage du tube 17. On peut aussi entourer l'ensemble formé par de tube 17 et le câble chauffant 18 par une gaine souple calorifugée, non représentée.

A l'autre extrémité 19 du tube 17, on raccorde une rampe tubulaire de déversement 20, présentant un conduit 21 de raccordement au tube souple 17, perpendiculaire à la rampe elle-même. La rampe tubulaire 20 présente une pluralité de buses de déversement équidistantes 22, adaptées au déversement de la composition liquide chaude. De préférence, la rampe 20, et éventuellement son conduit central 21, comportent également un câble ou cordon de chauffage électrique, non représenté, et peuvent, éventuellement être entourés d'une gaine calorifugée, également non représentée.

Enfin les buses 22 sont aussi entourées de moyens de chauffage, de préférences des colliers chauffants.

Tous ces éléments chauffants électriques, ceintures, cordons, et colliers, sont de type usuel, disponibles dans le commerce.

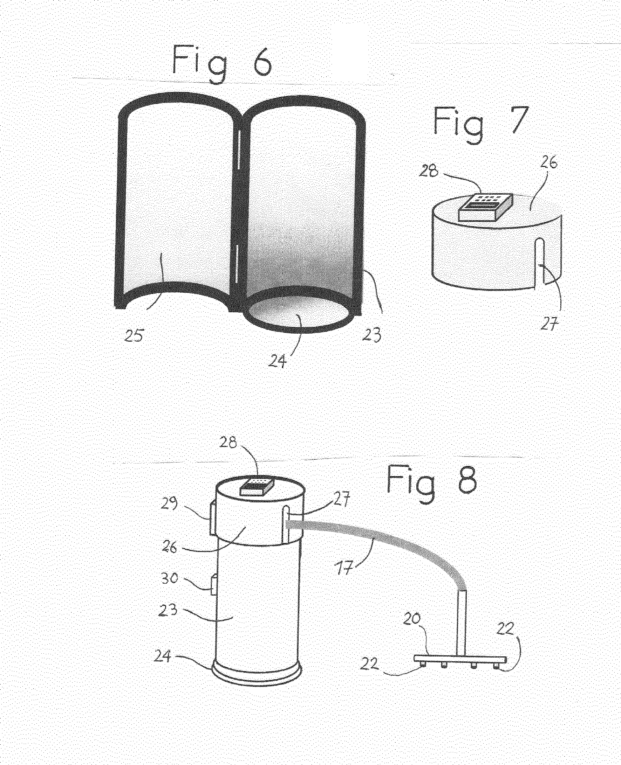

En se référant aux figures 6 à 8, on voit une enveloppe de calorifugeage 23 avec un fond 24 et une partie semi-cylindrique ouvrante 25 articulée. Une fois le récipient, formé par la cuve 1, son couvercle et ses différents composants, placé dans l'enceinte 23, celle-ci est recouverte, à sa partie supérieure, par un couvercle calorifugé 26, de forme cylindrique, avec une fente 27 pour le passage de la conduite de transfert 17, ce couvercle surmontant les éléments portés par le couvercle 8, tel que la pompe 12, le conduit 13 et le moteur d'agitateur 16.

De préférence le couvercle de calorifugeage 26 porte un boitier de commande 28, pour la pompe et l'agitateur, ce boitier pouvant être connecté, de façon amovible, par des câbles et des connecteurs, non représentés, à des moyens de connexion correspondants portés par le couvercle d'enceinte 8. Le couvercle 26 peut également comporter un connecteur d'alimentation électrique 29, qui peut être relié, de façon amovible à des moyens de connexion électrique portés par le couvercle 8, non représentés, pour alimenter la pompe 12, le moteur 16, et d'éventuelles électrovannes, non représentées pour le transfert de la composition liquide.

De préférence, l'enceinte 23 peut également comporter un connecteur d'alimentation électrique 30, raccordable de façon amovible, aux boitiers 5 de ceinture chauffante et 7 de fond chauffant. Le cas échéant ce connecteur 30 peut former un boitier comprenant les moyens de commande du chauffage.

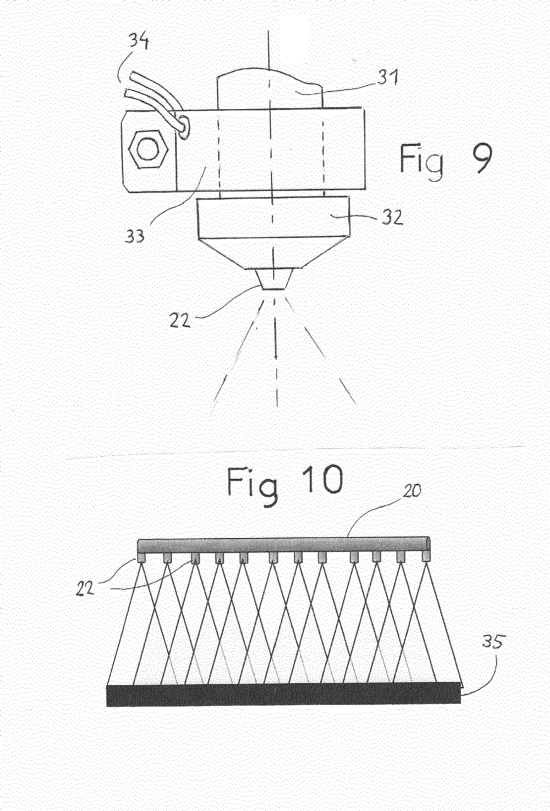

En se référant à la figure 9 on voit une buse 22 à jet plat, d'un type usuel dans le commerce, avec, sur le corps de buse 31, une partie vissée 32, permettant, par rotation, le réglage de l'angle d'épandage. Un collier chauffant 33, fixé autour de la buse, et alimenté en courant électrique par un câble 34, permet de maintenir la buse à la température désirée.

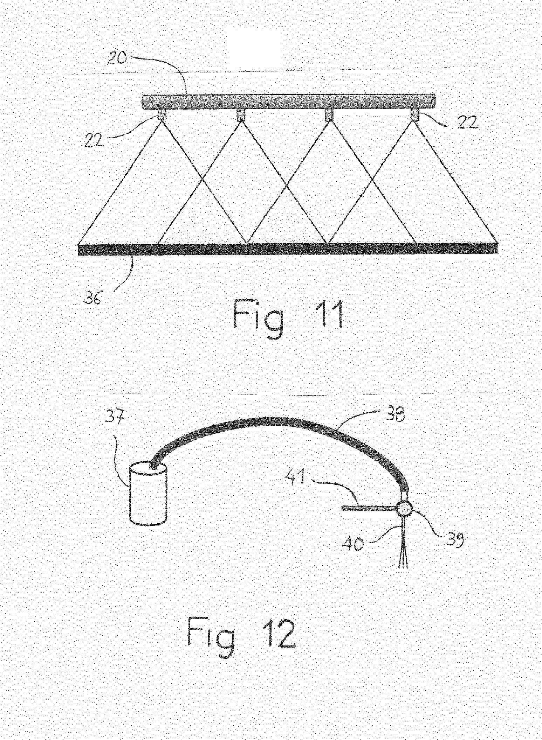

On se réfère maintenant aux figures 10 et 11. Sur la figure 10 on voit une rampe 20 formée d'un tube métallique présentant une pluralité de buses 22 orientées vers le bas et situées tous les 20 à 60 cm, par exemple 30 cm. Pour la solidification d'une nappe épaisse d'hydrocarbure 35 de grande épaisseur, par exemple de 0,5 à 60, voire 100 mm, on a réalisé des buses 22 à jet plat ayant un angle d'épandage compris entre 15 et 30° alimentées en composition liquide chaude, à une pression comprise entre 3 et 6 bar, les angles d'épandage se recouvrant au niveau de l'impact sur la nappe 35. La rampe 20 est portée par un ou des supports de hauteur réglable solidaires d'un véhicule ou embarcation, de façon à positionner la rampe à une hauteur de 30 à 100 cm au-dessus de la nappe 35.

Pour la solidification d'une nappe 36 moins épaisse, par exemple de quelques dixièmes de mm à 1 cm, on a représenté, sur la figure 11, une rampe 20 présentant des buses 22 avec un angle de pulvérisation de l'ordre de 80°, ces angles se recoupant au niveau de la nappe 36. La rampe peut avantageusement être située à une hauteur de 30 à 50 cm au-dessus de la nappe.

En se référant à la figure 12, on voit un dispositif de préparation de la nappe par aspersion d'acide citrique, comprenant un réservoir 37 d'acide citrique non chauffé, muni d'une pompe de transfert, ou préférentiellement d'un compresseur pneumatique, non représentés, permettant de transférer l'acide sous pression, par une conduit souple 38, vers une rampe 39, vue de profil, et présentant une pluralité de buses 40, permettant d'envoyer, vers le bas, des jets très fins d'acide. Ces buses sont, par exemple, situées à des intervalles de 15 à 30 cm, et sont alimentées à une pression comprise, par exemple, entre 3 et 6 bar. La rampe 39 est solidaire, par une des moyens de fixation 41, de la rampe 20, et est réglable en hauteur, indépendamment de la rampe 20, par exemple à une hauteur allant de 15 cm à 1 m. De plus la rampe d'acide est, de préférence, également réglable pour être écartée de la rampe 20 vers l'avant, d'une distance allant, par exemple, de 30 à 60 cm.

Ainsi la rampe 39, parallèle à la rampe 20, peut projeter sur la nappe polluante un rideau de jets très fins d'acide, perforant la nappe, qui est ainsi préparée pour recevoir, immédiatement après, l'aspersion ou la pulvérisation de composition liquide chaude selon l'invention.

En variante, la rampe 39 peut être remplacée par une rampe d'air comprimé envoyant vers le bas des jets très fins pouvant perforer la nappe d'hydrocarbure.

Les rampes 20, et leurs rampes 39 associées peuvent avoir des longueurs différentes, allant d'une dizaine de cm, pour des dispositifs de solidification portatifs de petite taille, jusqu'à 6 ou 10 m pour les pollutions de grande ampleur. On peut aussi prévoir des dispositifs portables n'ayant qu'une seule buse pour la composition, précédée, à courte distance d'une buse d'acide.

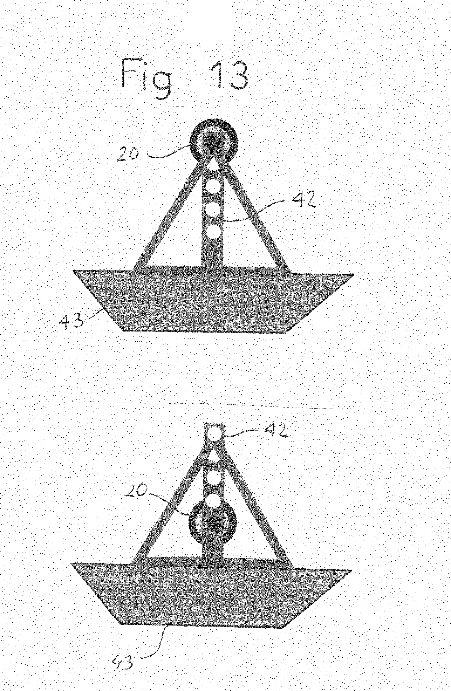

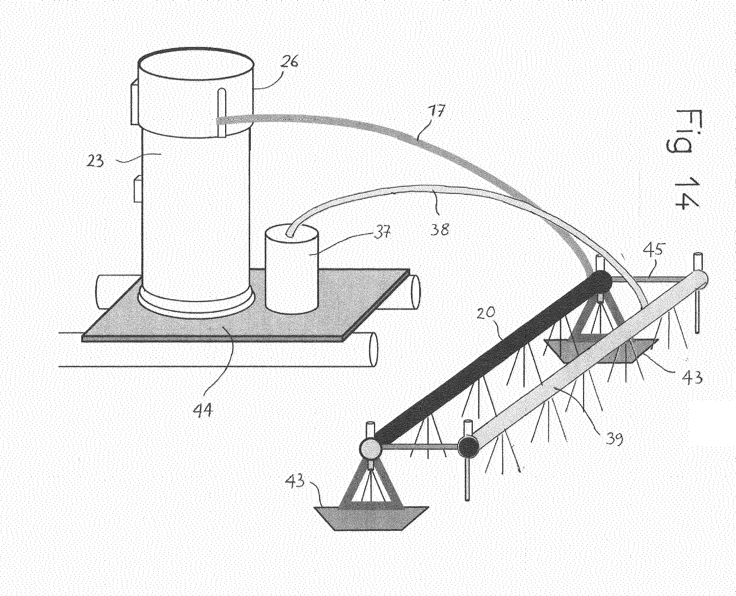

On a représenté, sur les figures 13 et 14, une rampe 20 de grande longueur, par exemple 4 m, formée d'un tube métallique obturé aux deux extrémités et présentant le long de son arête inférieure, une pluralité de buses équidistantes, ce tube portant un cordon chauffant et, de préférence, une gaine calorifugée, laissant dépasser les buses. A ces deux extrémités, la rampe 20 est portée, à une hauteur réglable, par des supports, par exemple des bras verticaux 42, eux-mêmes fixés sur des flotteurs correspondants 43.

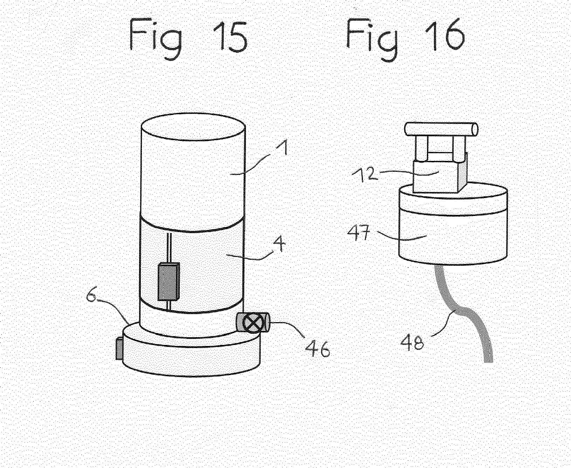

Cet ensemble est fixé devant la partie antérieure d'une embarcation 44, représentée sur les figures 15 et 16, qui porte le dispositif de préparation de la composition chaude liquide, avec son calorifugeage 23, 26 et qui est reliée au centre du tube, par une conduite 17, chauffée et calorifugée. Les flotteurs 43 peuvent aussi porter, à l'aide de bras 45 et dans une position avancée par rapport à la rampe 20, une rampe de projection d'acide 39, avec une pluralité de buses fines, la hauteur de cette rampe pouvant, de préférence, être réglée, indépendamment de celle de la rampe 20, et à une distance, par exemple de 30 à 60 cm devant cette dernière, dans le sens de déplacement de l'embarcation 44, qui pousse cet ensemble flottant, par exemple par l'intermédiaire de bras articulés reliant les flotteurs 43 à l'embarcation. La rampe 39 est reliée par le conduit 38, au dispositif d'alimentation en acide sous pression 37. Cette rampe 39 peut être décalée en arrière de la rampe 20, lorsque l'embarcation se déplace en direction opposée arrière.

Il n'est pas indispensable que les rampes soient portées par des flotteurs propres, mais ces derniers ont l'avantage de garantir une hauteur de déversement constante.

On se réfère aux figures 15 et 16.

La récupération du matériau de graisse animale, et du liquide polluant solidifié peut être mise en oeuvre dans une cuve chauffée, ce qui rend liquide les différentes matières qui décantent et forment des couches superposées, non miscibles. Le polluant, tel qu'hydrocarbure ou corps gras liquide forme une couche supérieure, reposant sur la couche de matériau solide à température ambiante choisi dans le groupe constitué par les graisses animales solides à température ambiante, tel que le suif, cette couche pouvant, le cas échéant reposer sur une mince couche d'eau, qui aurait pu provenir du ramassage de l'ensemble solide formé par le procédé selon l'invention. Ces couches peuvent être ensuite séparées, par exemple par de simples étapes d'aspiration. On préfère cependant laisser la cuve se refroidir, pour que ledit matériau, tel que le suif, se solidifie, puis on évacue la couche liquide sus-jacente de polluant pour récupérer ensuite le matériau sous forme solide.

De façon avantageuse, on peut utiliser des éléments identiques à ceux utilisés pour la fabrication de la composition liquide, par exemple une cuve 1, avec ses éléments chauffants 4 et 6. La cuve peut aussi présenter un robinet d'évacuation 46 à sa partie inférieure, en cas de formation d'une mince couche d'eau. La cuve peut être fermée par un couvercle 47 analogue au couvercle 8, pourvu ou non de l'agitateur 15 et de son moteur 16 relié par un embrayage, le tube 9 étant, pour sa part, remplacé par un tube souple 48 pour aspirer et évacuer le polluant.

De préférence le dispositif comporte également des moyens de refroidissement, ce qui permet alors de solidifier rapidement le matériau tel que le suif, une fois décanté, et ainsi faciliter encore la séparation. On peut, par exemple, prévoir d'entourer la cuve 1 par des ceintures chauffantes et refroidissantes alternées, ou bien par des serpentins chauds et froids entrelacés, avec une source de froid prévue, par exemple dans l'embase 6.

Le matériau redevenu solide peut ensuite être évacué, mais il est de loin préférable de l'utiliser pour un nouveau cycle de dépollution, en remplaçant, le cas échéant, le couvercle 47 par un couvercle 8, puis en calorifugeant le récipient, pour à nouveau rendre le matériau de la composition liquide, au besoin après ajout du produit lubrifiant.

Lorsque le procédé selon l'invention est appliqué à la dépollution d'une nappe sur une surface aquatique, par exemple fluviale, lacustre ou maritime, le recueil ou ramassage de la matière complexe solidifiée, qui flotte à la surface, peut être effectué par tout moyen adéquat, par exemple un filet. Le maillage de ce filet est de préférence assez fin pour récupérer l'essentiel de la matière solidifiée, tout en permettant un bon écoulement de l'eau, de façon à recueillir un matériau sensiblement dépourvu d'eau. De préférence le maillage est compris entre 4 et 10 mm, par exemple 5 mm.

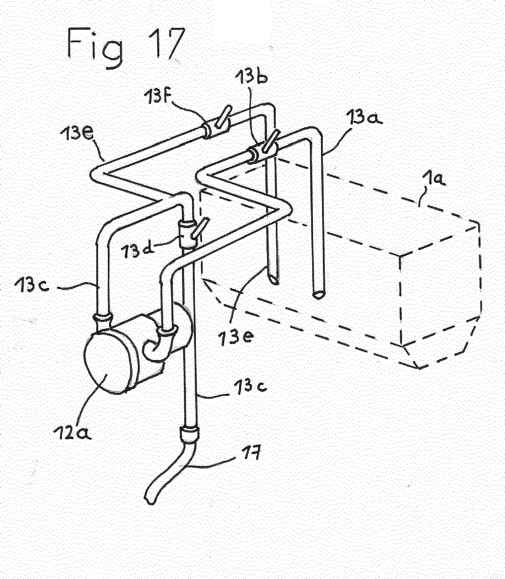

On se réfère à la Figure 17.

Afin de simplifier le dispositif selon l'invention il peut être avantageux de ne pas utiliser un agitateur. La cuve chauffante 1a destinée à chauffer la composition reçoit un tube d'aspiration 13a muni d'une vanne 13b et aboutissant à l'aspiration d'une pompe 12a, dont le refoulement délivre la composition à un tube de refoulement 13c muni d'une vanne 13d permettant le transfert de la composition chaude sous pression au conduit 17 alimentant la rampe de buses. Une dérivation 13e, munie d'une vanne 13f, permet, en alternative, de refouler la composition dans la cuve 1a, et, en conséquence d'homogénéiser la composition pendant sa préparation et son stockage.

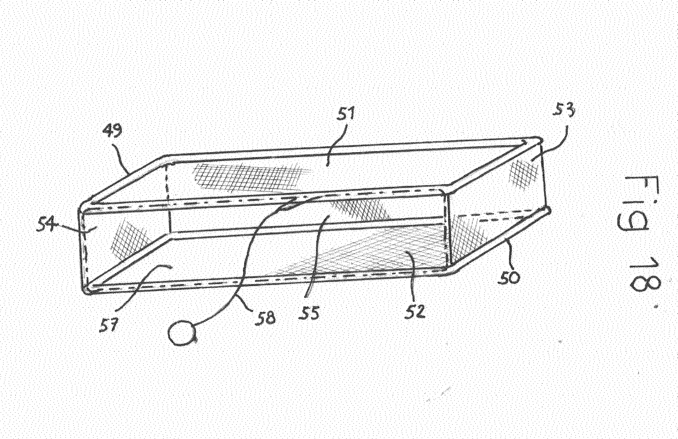

En se référant à la Figure 18 on voit un exemple de filet préféré comportant un boudin rectangulaire 49, rempli d'air, relié à un boudin inférieur similaire 50, mais rempli d'eau. La surface rectangulaire intérieure à chaque boudin présente une nappe de filet 51, 52, les deux boudins étant en outre reliés sur trois côtés du rectangle, par des parois de filet correspondantes, 53, 54, 55, le dernier grand coté formant la face d'ouverture 57 du filet. Un câble ou cordage 58 peut être prévu pour refermer l'ouverture du filet rempli à la fin de ramassage, les boudins étant alors vidés de leur air, respectivement de leur eau, à la suite de quoi le filet peut être hissé hors de l'eau pour être vidé dans une cuve. Ce câble peut, par exemple, être guidé le long des tronçons antérieurs des boudins 49 et 50, voire le long des bords antérieurs des côtés de filet 52, 53, par exemple, par des passants. Le filet fermé et qui reste flottant peut aussi être laissé sur place pour être ensuite récupéré par une autre embarcation.

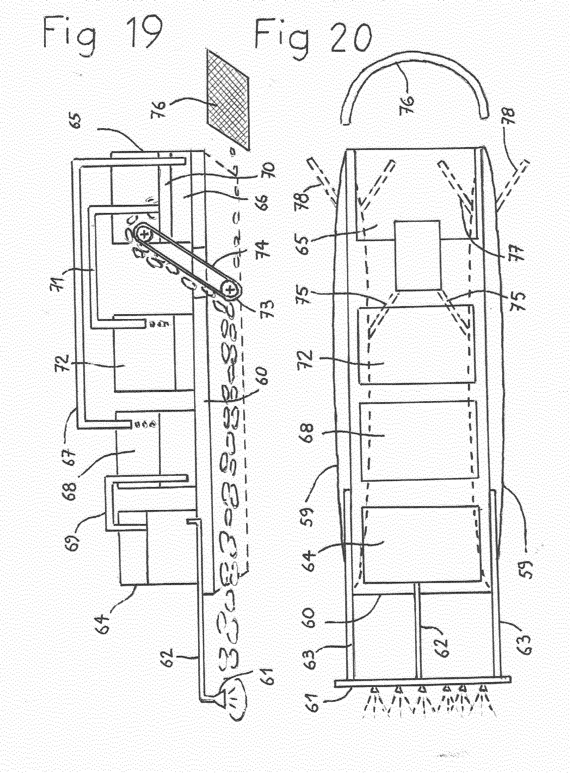

En se référant aux figures 19 et 20 on va maintenant décrire un dispositif pour la mise en oeuvre du procédé pour une nappe d'hydrocarbure de grande ou très grande surface, en milieu aquatique, dans lequel on procède, en continu, à la mise en forme solide de la nappe, au recueil du matériau complexe solide ainsi formé, à la séparation dudit matériau solide à température ambiante, d'avec l'hydrocarbure, à la refabrication de ladite composition à partir dudit matériau séparé, puis au déversement de ladite composition refabriquée, ainsi qu'au stockage ou à l'évacuation de l'hydrocarbure liquide.

L'ensemble comporte une embarcation à deux coques ou flotteurs 59 reliés par un pont 60, du type catamaran, les coques étant écartées d'une distance de 6 m, par exemple, l'embarcation comportant des moyens moteurs entrainant une ou des hélices immergées en profondeur pour ne pas influer sensiblement sur la nappe, les moyens de gouverne et de navigation usuels, et un groupe électrogène. Cette embarcation porte, à l'avant du pont 60, les deux rampes 20 et 39 représentées sur la figure 14, avec leurs flotteurs, réglées aux hauteurs voulues tenant compte de la nature et de l'épaisseur de la nappe, représentées dans leur ensemble sous la référence 61 et alimentées par leurs conduits respectifs, désignés dans leur ensemble sous la référence 62. Ces rampes sont reliées au pont 60 par deux bras articulés 63.

Le pont 60 porte un dispositif 64 de fabrication de la composition chauffée liquide, par exemple du type décrit aux Figures 1 à 8, ou 17, pour alimenter la rampe de déversement 20, ainsi qu'un dispositif, non représenté, d'alimentation de la rampe 39, incorporant un récipient d'acide citrique de grand volume.

Le pont porte également un dispositif 65 de récupération du matériau de graisse animale, et du liquide polluant solidifié, par exemple du type représenté sur les Figures 15 et 16, ce dispositif pouvant extraire le matériau, tel que du suif, de préférence sous forme encore liquide, depuis la couche 66, pour le transférer, de préférence périodiquement, par une conduite 67, à une cuve intermédiaire chauffée 68, alimentant, de préférence périodiquement, le dispositif 64 en matériau déjà liquide, par une conduite 69. La couche d'hydrocarbure 70, pour sa part, est évacuée par un conduit 71, vers une cuve ou récipient d'hydrocarbure 72.

Les mottes ou agrégats solides de matériau complexe formés par le déversement de la composition selon l'invention, et qui flottent entre les deux coques de l'embarcation sont recueillies par des moyens de ramassage 73, qui les déversent dans la cuve du dispositif de récupération 65. Ces moyens de ramassage peuvent être divers, par exemple une chaîne à godets, dont les godets, non représentés, présentent un fond grillagé pour laisser s'évacuer, pendant la montée, l'eau recueillie avec le matériau tout en retenant ce dernier, ou même, simplement, un tapis roulant 74 incliné selon un angle assez faible, de préférence grillagé, éventuellement muni, à intervalles réguliers, de traverses de retenue, ou bien possédant simplement, à sa surface externe une rugosité suffisante empêchant les plus grosses mottes ou fragments de rouler vers le bas, l'extrémité inférieure du tapis étant immergée pour recevoir le matériau complexe solidifié.

Ces moyens de ramassage peuvent s'étendre sur toute la distance du pont entre les deux flotteurs, mais on peut aussi utiliser un dispositif de ramassage beaucoup moins large, situé, de préférence, au milieu du pont 59, en prévoyant deux déflecteurs 75 partiellement immergés convergeant au milieu et vers l'arrière, pour guider la nappe solidifiée vers le dispositif de ramassage 73, à la manière d'un entonnoir.

On peut également prévoir, à l'arrière de l'embarcation, de ramasser, avec un filet 76, par exemple, du type décrit sur la Figure 18, les fragments résiduels, qui n'ont pas été ramassés par le dispositif de recueil 73. Deux déflecteurs 77 peuvent être prévus pour centrer ces fragments vers le filet 76.

Enfin ou peut aussi prévoir deux déflecteurs latéraux externes 78 peuvent aussi être prévus pour garantir que les parties non traitées de la nappe polluante et adjacentes aux bords latéraux externes des flotteurs ne se dirigent vers le filet 76.

L'embarcation comporte également des moyens moteurs, avec une ou des hélices immergées à plusieurs mètres de profondeur, des moyens de gouverne, des moyens d'alimentation, de préférence électriques pour entrainer les différents dispositifs mobiles, notamment les pompes des circuits, les moyens d'agitation, le dispositif de ramassage, et d'une façon générale tous accessoires utiles. Pour le chauffage des cuves il est préférable d'utiliser des moyens de chauffage au gaz.

On peut ainsi, avec une quantité raisonnable de matériau, tel que du suif, traiter des nappes, s'étendant sur des surfaces considérables, dans le cas de pollutions majeures. On pourra alors préférer assurer l'étape de préparation de la nappe par des jets d'air comprimé, et/ou des lames mécaniques, pour éviter une consommation trop élevée d'acide, sachant que pour les pollutions d'hydrocarbures assez fluides, ou peu épaisses, on pourra déverser la composition selon l'invention directement sans préparation de la nappe.

## Revendications

1. Procédé de mise en forme solide d'hydrocarbures ou de corps gras sous forme sensiblement liquide, notamment pour la dépollution de surfaces ou de sites pollués par ces hydrocarbures ou corps gras, **caractérisée en ce que** l'on met en contact la matière à mettre sous forme solide avec une composition à l'état liquide, comprenant, au moins en proportion majoritaire, un matériau solide à température ambiante choisi dans le groupe constitué par les graisses animales solides à température ambiante , et optionnellement, un agent fluidifiant, obtenant ainsi un matériau complexe solide, l'état liquide de ladite composition étant obtenu, notamment, par chauffage dudit matériau solide ou de la composition à une température de préférence d'au moins 35°C, notamment de 45 à 55°C.

2. Procédé selon la revendication 1, dans lequel on procède, immédiatement avant ladite mise en contact, à une étape de préparation de la matière à solidifier améliorant la distribution de ladite composition dans la matière, ladite étape comprenant une aspersion par un acide, notamment un acide organique à chaîne courte, notamment l'acide citrique, ou l'acide acétique, le volume d'acide déversé étant préférentiellement inférieur ou égal à 10 %, du volume total de composition utilisée, notamment à 2 à 4 ou 5 %, et/ou l'envoi d'un jet de gaz comprimé, notamment d'air comprimé sur la matière à solidifier, et/ou une dissociation mécanique de ladite matière liquide à solidifier, ladite étape de préparation étant mise en oeuvre dans une zone à courte distance , de préférence de 5 cm à 1 m, notamment entre 15 et 50 cm, devant la zone de mise en contact de la matière avec la composition sous forme liquide.

3. Utilisation d'une composition pour la mise en forme solide d'hydrocarbures ou de corps gras sous forme sensiblement liquide, notamment pour la dépollution de surfaces ou de sites pollués par ces hydrocarbures ou corps gras, la composition comprenant, en proportion majoritaire, un matériau solide à température ambiante choisi dans le groupe constitué par les graisses animales, préférentiellement du suif, notamment du suif de boeuf ou de mouton, ladite graisse animale possédant préférentiellement un point de fusion non inférieur à 35°C, et optionnellement, un agent fluidifiant, notamment une huile, préférentiellement une huile minérale, la proportion d'agent fluidifiant étant préférentiellement inférieure ou égale à 5 % en poids, notamment de l'ordre de 1 à 2 %.

4. Utilisation selon la revendication 3, **caractérisée en ce que** la proportion en volume dudit matériau solide, par rapport à la composition totale, est d'au moins 75 %, et préférentiellement d'au moins 90 %, voire 100%.

5. Procédé de récupération du matériau solide à température ambiante à partir d'un matériau complexe solide obtenu par le procédé selon l'une des revendications 1 et 2 en vue de fabriquer une composition telle que définie à l'une des revendications 3 et 4, **caractérisé en ce que** l'on chauffe ledit matériau complexe à une température égale ou supérieure au point de fusion du matériau solide à température ambiante de la composition selon l'invention, puis on sépare ledit matériau solide à température ambiante.

6. Procédé de dépollution par mise en forme solide, selon l'une des revendications 1 et 2, d'une matière d'hydrocarbures ou de corps gras sensiblement liquide en nappe sur un site, en vue de la dépollution de ce site, **caractérisé en ce que** l'on déverse sur la nappe une quantité de composition selon l'une des revendications 3 et 4, chauffée à l'état liquide, de façon à amener la composition en contact avec la nappe en un grand nombre de points, ou même sur la continuité de la surface traitée de la nappe, on recueille le matériau complexe solide ainsi formé, et , optionnellement, on sépare par chauffage au moins ledit matériau solide à température ambiante, d'avec les hydrocarbures ou corps gras provenant de la nappe.

7. Procédé selon la revendication 6, **caractérisé en ce que** l'on déverse une quantité de composition allant de 0,05 à 1 litre, notamment de 0,05 à 0,25 litre pour 1 litre d'hydrocarbure ou de corps gras.

8. Procédé selon l'une des revendications 6 et 7, **caractérisé en ce que** l'on procède, en continu, à la mise en forme solide de ladite matière d'hydrocarbures ou de corps gras sensiblement liquide par déversement de ladite composition, au recueil dudit matériau complexe solide ainsi formé, à la séparation par chauffage, au moins, dudit matériau solide à température ambiante, d'avec les hydrocarbures ou corps gras recueillis, à la refabrication de ladite composition à partir dudit matériau séparé, puis au déversement de ladite composition refabriquée.

9. Dispositif pour la mise en oeuvre du procédé de mise en forme solide d'hydrocarbures ou de corps gras sous forme sensiblement liquide selon l'une des revendications 1 et 2, ou 6 à 8, **caractérisé en ce qu'il** comprend un récipient(1, 8) pouvant contenir un volume de ladite composition à l'état liquide, des moyens de déversement (20,22) de cette composition, notamment une buse ou une pluralité de buses, notamment sur une rampe de buses, et des moyens (12, 17) pour son transfert sous pression depuis ledit récipient vers lesdits moyens de déversement, et optionnellement des moyens de chauffage (4,6), et/ou des moyens d'agitation (15,16) du contenu dudit récipient.

10. Dispositif selon la revendication 9, **caractérisé en ce qu'il** comprend une pluralité de fines buses (40) de déversement d'acide présentées sur une rampe (39) solidarisable à une rampe de déversement de la composition, les deux rampes étant alors disposées de façon que la zone d'aspersion d'acide précède de peu la zone de déversement de composition, de sorte que lors de l'avance du dispositif la composition se déverse immédiatement sur la matière liquide qui vient d'être aspergée par l'acide, et/ou des moyens pour l'envoi de jets d'air comprimé disposés de façon que la zone d'impact des jets précède de peu la zone de déversement de composition, de sorte que lors de l'avance du dispositif la composition se déverse immédiatement sur la matière liquide qui vient de recevoir lesdits jets.

11. Dispositif selon l'une des revendications 9 et 10, **caractérisé en ce qu'il** comporte également un dispositif de récupération du matériau solide à température ambiante en vue de fabriquer à nouveau ladite composition, comprenant un récipient (1) muni de moyens de chauffage (4,6) à une température égale ou supérieure au point de fusion du matériau solide à température ambiante de la composition selon l'invention, pour obtenir une couche dudit matériau surmonté d'une couche d'hydrocarbure ou de corps gras liquide, et des moyens de séparation (12, 48, 65, 69) dudit matériau solide à température ambiante et l'hydrocarbure ou corps gras liquide.

12. Dispositif selon l'une des revendications 9 à 11, pour la dépollution de nappes sur des surfaces aquatiques, **caractérisé en ce que** lesdits des moyens de déversement (20,22) de la composition sont fixés sur des flotteurs (43) reliés à une embarcation portant le dispositif de fabrication de la composition à l'état liquide.

13. Dispositif selon l'une des revendications 9 à 12, pour la dépollution de nappes sur des surfaces aquatiques, **caractérisé en ce qu'il** comporte un véhicule ou embarcation portant le dispositif (64) de fabrication de la composition à l'état liquide, optionnellement un dispositif (65) de récupération du matériau solide à température ambiante en vue de fabriquer à nouveau la composition, et des moyens de recueil (73,74) du matériau complexe formé par le déversement de la composition, notamment par filet (51, 76) ou élévateur à tapis (73).

14. Dispositif selon la revendication 13, **caractérisé en ce que** l'embarcation possède deux flotteurs (59) reliés par un pont (60), portant, à l'avant, par des bras articulés, des moyens de rampe (61), et à l'arrière lesdits moyens de recueil (73, 74), alimentant le dispositif (65) de récupération du matériau solide à température ambiante en vue de fabriquer à nouveau la composition en continu, à partir du matériau solide complexe recueilli.

15. Dispositif selon l'une des revendications 9 à 14, **caractérisé en ce qu'il** comporte des moyens de ramassage comportant un filet présentant un boudin supérieur (49) susceptible d'être rempli d'air, et un boudin inférieur (50) susceptible d'être rempli d'eau, et reliés entre eux par des parois de filet, en laissant une ouverture antérieure, des moyens de filin coulissant (58) pouvant être prévus pour refermer cette ouverture.
